# EUROPEAN PATENT APPLICATION

(11) **EP 2 071 433 A2**
(43) Date of publication of application: **17.06.2009**
(21) Application number: 08170893.5
(22) Date of filing: 05.12.2008
(51) Int. Cl.: G06F 3/033

(54) **User interface for selecting and controlling plurality of parameters and method for selecting and controlling plurality of parameters**

(30) Priority: 12.12.2007 EP 07024027
(71) Applicant: ADVANCED DIGITAL BROADCAST S.A., 1292 Chambesy (CH)
(72) Inventor: Paczkowski, Jacek, 40-111, Katowice (PL)
(74) Representative: Pawlowski, Adam

(57) **Abstract**

A user interface for selecting and controlling a plurality of parameters of a device comprises a touch-sensitive apparatus (100) with a touch-sensitive area (101) and a controller (107). The touch-sensitive area (101) has a closed-loop shape limited at outside by an outer closed curve (105) and at inside by an inner closed curve (106) and capable to receive a touch input, whereas the controller (107) is connected to the touch-sensitive apparatus (100) and configured to detect a starting point (102) of the touch input, detect a touch hold duration at the starting point (102), in case of a touch hold duration not shorter than the activation time, determine a parameter associated with the starting point (102), in case of a hold duration shorter than the activation time, determine a previously controlled parameter, and control the determined parameter while the touch input moves along a control path (103). In addition, the control is sensitive to movement direction.

## Description

The invention relates to a user interface for selecting and controlling a plurality of parameters and a method for selecting and controlling a plurality of parameters of a device provided with a touch-sensitive apparatus with a touch-sensitive area and a controller.

The miniaturization of electronic devices, accompanied by increase in their functionality, calls for improvements in user interface design.

Conventional user interface elements, such as keys, buttons and switches, have become inefficient as the number and complexity of functions offered by devices increase. More elaborate user interfaces, such as touch pads, have gained popularity, especially in small-sized electronic devices. Typical touch pads have a rectangular shape. They may be overlaid on a display to form a touch screen. A touch screen may display a plurality of controls, such as buttons, switches or sliders, for controlling a plurality of parameters. Each control occupies an individual region, over which it can be activated or manipulated. The type of controls displayed on the screen and controllable by touch can be configured by software controlling the touch screen. The drawback of a touch screen with conventional controls is that as the number of controls to be displayed increases, the touch screen size has to be increased as well. Alternatively, to maintain a constant size of the touch screen, the size of the controls can be decreased. In case of controls such as sliders, this leads to decrease of the control region and thus decrease of the accuracy of manipulation.

One of the recent advancements to user interface design is an annular touch pad as presented in the US patent No. 7,046,230 entitled *"Touch pad handheld device".* The touch pad is configured to receive swirling motion input by user's finger in order to implement a control function, such as scrolling a list of items or controlling the volume. The interface has the drawback of controlling only one function at a time.

There is a need for a user interface which could allow easy selection and control of a plurality of parameters on a limited area.

According to the invention, a user interface for selecting and controlling a plurality of parameters of a device comprises a touch-sensitive apparatus with a touch-sensitive area, which has a closed-loop shape limited at outside by an outer closed curve and at inside by an inner closed curve and capable to receive a touch input. In addition, the user interface contains a controller connected to the touch-sensitive apparatus and configured to determine an activation time, detect a starting point of the touch input, detect a touch hold duration at the starting point, in case of a touch hold duration not shorter than the activation time, determine a parameter associated with the starting point, in case of a hold duration shorter than the activation time, determine a previously controlled parameter and control the determined parameter while the touch input moves along a control path. The controller when works is sensitive to movement direction.

It is advantageous when the starting points and control paths associated with parameters are arranged such that the control paths of parameters associated with neighboring starting points overlap or are unlimited.

Preferably, the touch-sensitive area is of an annular shape.

It is favorable that the user interface further comprises additional input means, and the controller is configured to activate and/or deactivate upon detecting an input to the additional input means.

Preferably, the touch-sensitive apparatus is a touch screen.

It is also favorable that the controller is further configured to visualize regions on the touch screen with which starting points are associated and the control path of a determined parameter as well as the value of the determined parameter.

The idea of the invention is also a device with at least one user interface having features described above and which can be a portable multimedia player or a remote control unit.

Furthermore, the idea of the invention is a method for selecting and controlling a plurality of parameters of a device having a touch-sensitive apparatus with a touch-sensitive area and a controller. This method comprises the steps of detecting the touch-sensitive area of a closed-loop shape for receiving a touch input, detecting a starting point of the touch input, determining an activation time for selecting a parameter, detecting a touch hold duration at the starting point, , in case of a touch hold duration not shorter than the activation time, determining a parameter associated with the starting point, in case of a hold duration shorter than the activation time, determining a previously controlled parameter and controlling the determined parameter while the touch input moves along a control path, the control being sensitive to movement direction.

In addition, the idea of the invention is a computer program comprising program code means for performing the steps of the above described method when said program is run on a computer as well as a computer program product stored on a computer usable medium comprising computer readable program means which, when executed, cause a computer to perform all of the steps of this method.

The invention will now be described by way of example and with reference to the accompanying drawings in which:
Fig. 1 shows a general diagram of the user interface according to the invention;
Fig. 2 shows a diagram of the user interface incorporating a touch screen;
Fig. 3 shows one type of touch-sensitive area;
Fig. 4 shows another type of touch-sensitive area;
Fig. 5 shows flow chart of a procedure of operation of the user interface;
Figs. 6A to 6D show various exemplary shapes of the touch-sensitive area;
Figs. 7A to 7F show exemplary configuration of starting regions;
Figs. 8A to 8D show exemplary ways of indication of starting regions; and
Figs. 9A to 9F show exemplary ways of indication of control range.

The embodiments presented in the drawings are intended only for illustrative purpose and do not limit the scope of the invention, as defined by the accompanying claims.

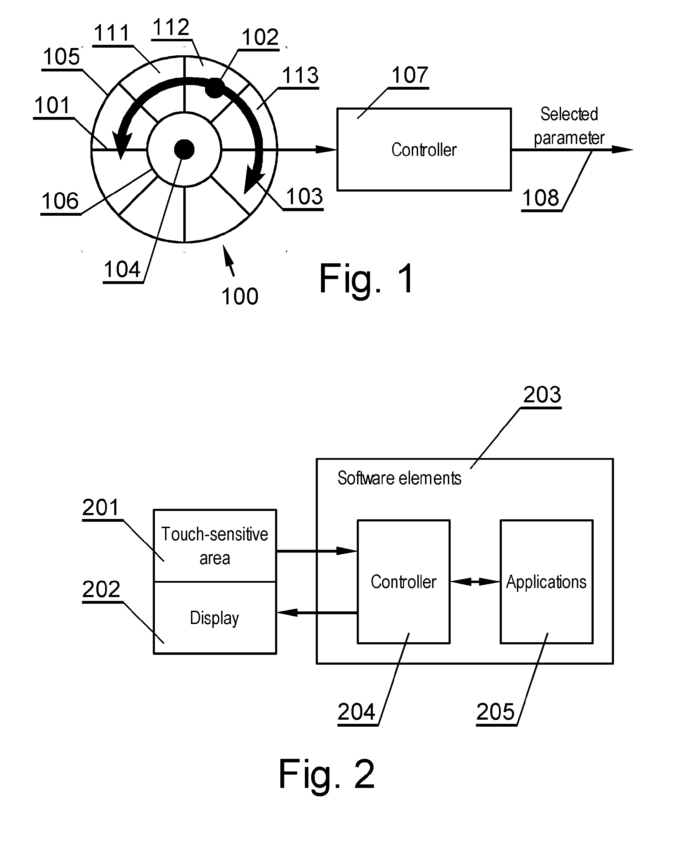

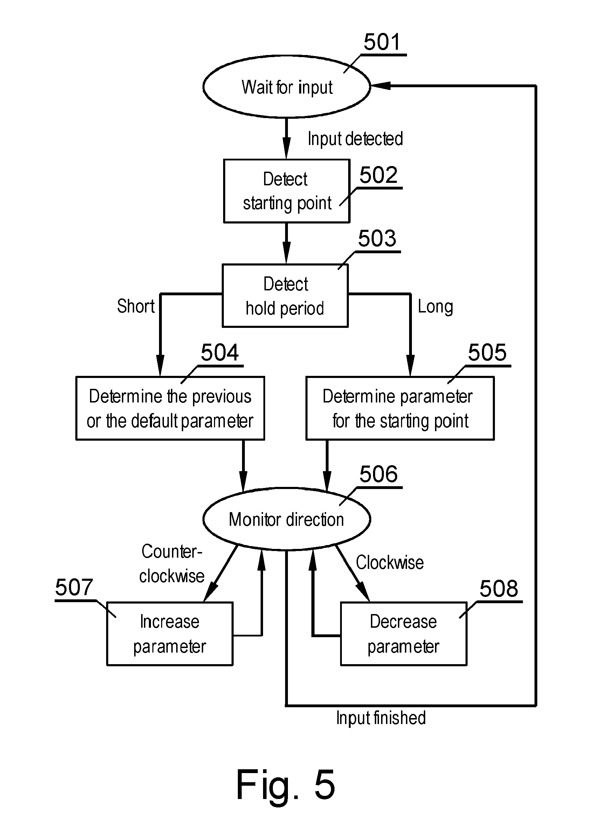

A user interface, shown in Fig. 1, contains a touch-sensitive apparatus 100 with a touch-sensitive area 101 having a closed-loop shape, for receiving a touch input. The touch-sensitive area 101 is limited or surrounded at outside by an outer closed curve 105 and at inside by an inner closed curve 106 placed within the outer closed curve 105. The touch-sensitive area 101 can be a touch pad device of a closed-loop shape or a fragment of a touch pad device having larger dimensions, and a specific area designated as a user interface for controlling parameters. In particular, a single touch pad may have a plurality of areas 101 designated for controlling a plurality of sets of functions or parameters. The input can be initiated by user's finger or an object, such as a stylus. A controller 107 is connected to the touch-sensitive area 101, which receives the input detected by the touch-sensitive area 101 and selects and controls one of a plurality of parameters. The interface is configured such that the user may select and control parameters by movable input, the parameter being selectable by the point from which the input starts and the touch hold duration at the starting point. Each parameter may be selectable by a set of starting points, forming starting regions 111, 112, 113. The controller 107 is configured to detect a starting point 102 of the touch input, detect the touch hold duration, determine a parameter associated with that starting point and touch hold duration, and control the parameter 108 while the touch input moves along a control path 103 from the starting point 102, the control being sensitive to the direction of the movement. A more detailed description of the operation of the controller is presented in Fig. 5.

The range of the control path can be individually configurable for each parameter. In one embodiment, the range of the control path may be limited to the starting region associated with a given parameter.

In order to provide high accuracy of control of parameters, the range of the control path 103 of a given parameter can extend beyond the starting region 112 associated with the specific parameter to other regions, for example at least to the regions 111, 113 of control of parameters having neighboring starting points. In such a case, the control paths of parameters associated with neighboring starting points overlap. In such configuration, in order to increase the number of parameters to be controlled by the user interface, only the size of the starting regions must be decreased in order to fit more regions on a given area, but the range of the control paths does not have to be limited. Therefore, such user interface allows, for a constant size of the touch-sensitive area, increasing the number of controlled parameters without degrading the control accuracy. In order to provide a still higher accuracy of control of parameters, the range of the control path of each parameter may be unlimited, which means that the user can make several circles over the area, to change the parameter, for example scroll through a long list or adjust a parameter with a high degree of precision.

The user interface may comprise additional input means 104, for example an additional touch-sensitive area or a button, which may be used to activate or deactivate the controller. For example, in order to indicate that the user is willing to change a parameter, the user may have to press the button 104 and then to indicate the parameter via the touch-sensitive area 101. Similarly, the end of changing the parameter may be indicated by pressing the button 104.

The user interface may be used to control the parameters of a device of which it forms an integral part, such as a mobile phone, a portable media player, a personal digital assistant (PDA) or a laptop computer. The user interface may be also remote from the device it controls, for example it can be an external touch pad connected by wire or wirelessly to a device such as a personal computer, or it can be embedded in a remote control unit for controlling a TV set, a set-top box or other multimedia device.

Fig. 2 shows a diagram of the user interface incorporating a touch-sensitive area 201 with a display 202, thus forming a touch screen. Use of a touch screen allows indicating a user interface configuration to the user, such as indicating the available starting regions, range of the control paths or current parameter value, as described with reference to further figures. However, the use of the screen is not essential and simpler embodiments are possible, where the configuration of the user interface is not shown. Elements of the configuration, such as the starting regions, may be permanently printed on the touch screen. In this embodiment, the controller 204 is a software program, being one of the software elements 203 of the device. The controller 204 may communicate with other software applications. The controlled parameters may belong to various applications. For example, in case of a television receiver, the user interface might control volume (handled by an audio application), channels (handled by tuner application) and brightness and contrast (both handled by video application).

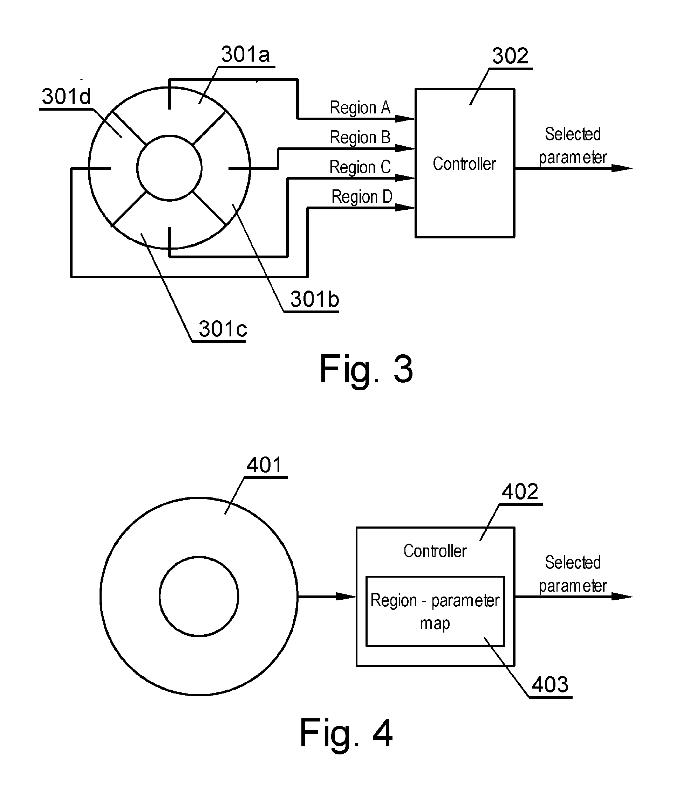

Fig. 3 shows one type of touch sensitive area, which has four pre-defined regions 301a - 301 d for controlling four parameters. Each region is connected to a separate output and the controller recognizes the starting point by the input from which the signal from the touch sensitive area originated. The movement of the input may be recognized by appearance of input signals from other regions. The inputs from regions A-D may be binary (touched/not touched) or analog, i.e. they may present a value indicating the distance between the input and the middle of the region.

Fig. 4 shows another type of the touch sensitive area 401, which outputs a single signal, indicating a precise position of the input. The position may be indicated in angular coordinates or as a distance from a specific point. The controller 402 has a region-parameter map, which comprises relations between regions (or points) of the touch-sensitive area 401 and parameters associated with that regions.

Fig. 5 shows a procedure of operation of the user interface. The controller is initiated by detecting a touch-sensitive area of a closed-loop shape for receiving a touch input, for example by reading the definition of the touch-sensitive area from the region-parameter map. The controller also determines an activation time for selecting a parameter, for example to 1 second. The activation time may be predefined or may be configurable by applications 205. The controller waits in step 501 for the touch-sensitive area to detect an input. Upon detection of the input, the controller detects in step 502 the starting point by analyzing the input signal from the touch-sensitive area. In step 503 the controller detects the touch hold period, which is the time for which the touch input was held at the starting point. Next it compares the touch hold period to the activation time. In case the hold period is long, i.e. not shorter than the activation time, the controller determines in step 505, which parameter is associated with that starting point. In case the hold period is short, i.e. shorter than the activation time, the controller determines in step 504 a parameter which was previously controlled or a default parameter. The default parameter may be predefined or configured by an application 205. Step 504 is also executed in case the starting point was not associated with any parameter. Next, the controller monitors in step 506 the input signal from the touch-sensitive interface to determine the direction of the movement of the input. In case of a touch-sensitive interface of annular shape, it may monitor if the direction is clockwise or counter-clockwise. In case of other shapes, it may monitor other directions (left, right, up, down, movement in a specific angle or activation of other regions as in the embodiment shown on Fig. 3). Depending on the direction, the controller changes the value of the parameter in steps 505 and 506. The degree of change of the parameter may depend on a specific application. For example, the controller may output a specific value or output a +1 or -1 sign. If the controller detects a signal that the input is finished, it returns to step 501 to wait for another input. The signal that the input is finished may be end of touch or press of a specific button.

Due to the fact that the parameter selection depends on the touch hold period at the starting point, the selection of parameter is easier and more flexible for the user. Some users, especially inexperienced with touch-based interfaces, may find it difficult to hold their finger at the touch area for the whole range of movement. Their input may be released for a short time. In case the input is continued after the release without holding the input at the starting point for long, the control of the previously active parameter is still possible, without the need of returning to the starting point associated for the given parameter. In addition, use of a predefined parameter for inputs having short hold time allows the user for convenient control of most important parameter by starting at any point. Selection of specific parameter is then performed by holding the touch at the starting point.

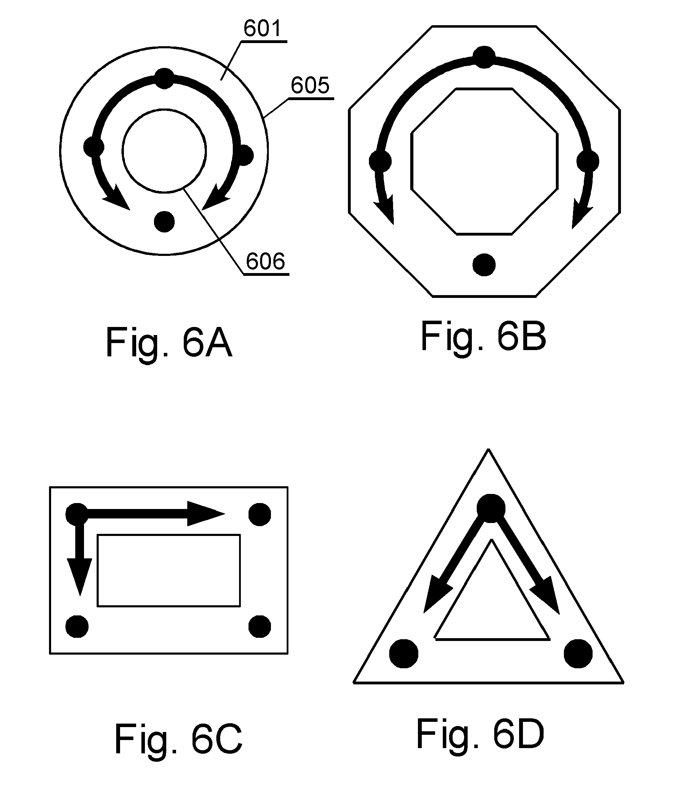

Figs. 6A to 6D show various exemplary shapes of the touch-sensitive area, the exemplary arrangement of starting points (marked by dots) and exemplary ranges of control (marked by arrows). The ring shaped-area 601 limited by an outer circle 605 and an inner circle 606, and shown in Fig. 6A is especially useful for controlling a plurality of parameters with unlimited range of control. The octagonal shape of Fig. 6B is usable for similar purposes as a ring. The rectangular shape of Fig. 6C is especially useful for controlling 4 parameters, where the ranges of control of neighboring parameters overlap. The triangular shape of Fig. 6D is useful for controlling three parameters.

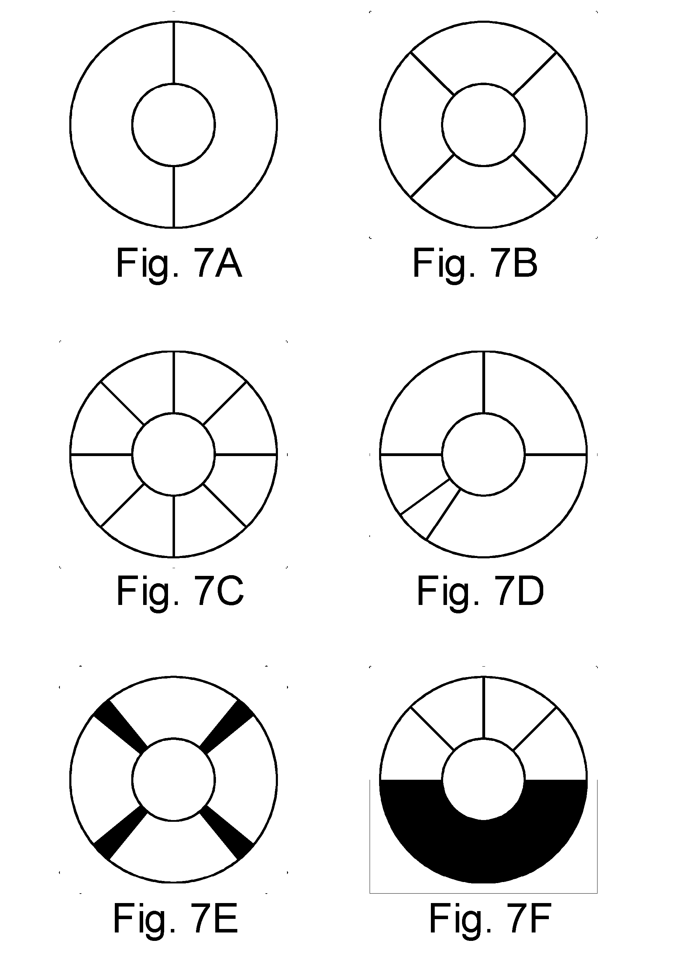

Figs. 7A to 7F show exemplary configuration of starting regions in case of a touch-sensitive area having a shape of a ring. Other shapes of the touch-sensitive areas may be divided into regions using analogous rules. Fig. 7A shows two regions, Fig. 7B - four regions, Fig. 7C - eight regions. The number of starting regions can be arbitrary and the size of the regions does not have to be the same, as shown in Fig. 7D. Furthermore, spacers may be introduced between the starting regions, as shown in Fig. 7E. The spacers are regions with which no starting point is associated. This reduces the possibility of an error in choosing the parameter to control, as the user has less chance to start movement accidentally from an incorrect region. The touch-sensitive area may be also arranged such that the starting regions occupy only its part, and the other part comprises a spacer and is thus inactive, as shown in Fig. 7F.

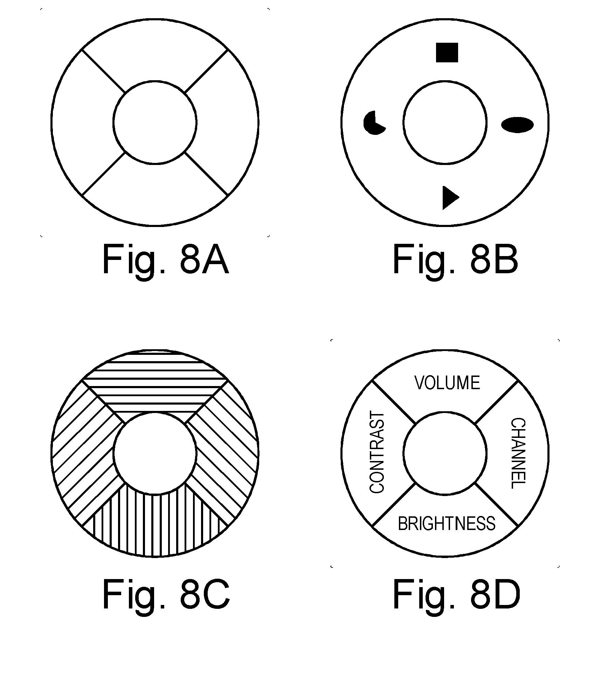

Figs. 8A to 8D show exemplary ways of indication of starting regions in case the touch-sensitive area is a touch screen. The regions may be divided by lines, as shown in Fig. 8A. They may be also marked by icons, as shown in Fig. 8B. The regions may be filled with different colors or patterns, as shown in Fig. 8C. Furthermore, text may be displayed as indication of the function of the region, as shown in Fig. 8D. The ways of indication may be combined with each other and are shown as exemplary only.

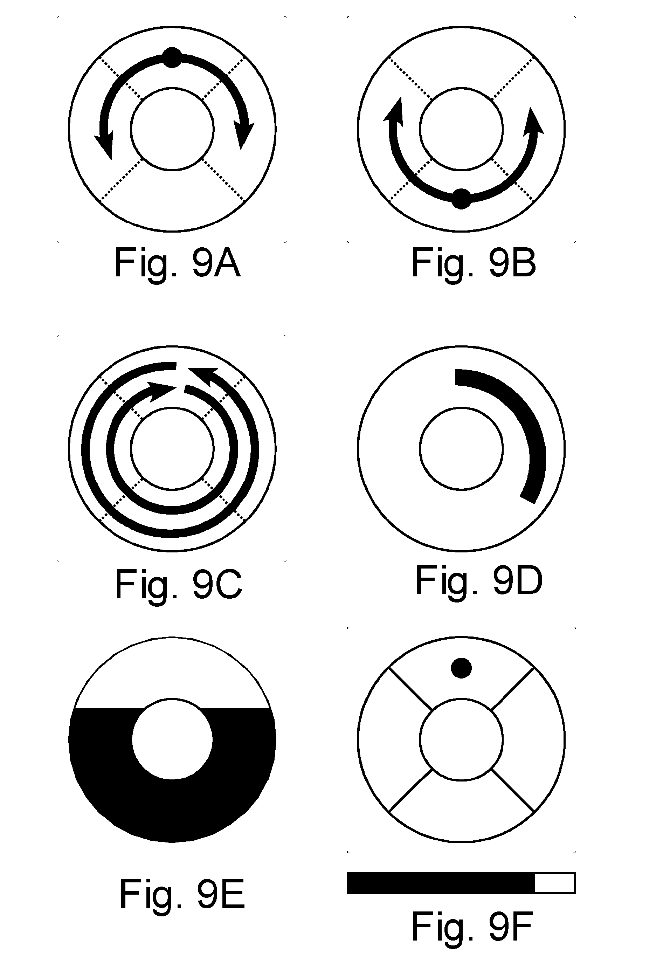

Figs. 9A to 9F show exemplary ways of indication of control range. The control range may be indicated by arrows, as shown in Fig. 9A or 9B for different starting points. Fig. 9C shows indication of a possibility of unlimited range of control.

Fig. 9D shows a value of the parameter being adjusted, which is generated by the controller itself or by an external application, to which the controller passes the parameter. Fig. 9E shows another way of indicating the value of the parameter, by filling the screen. Fig. 9F shows an additional display, on which the value of the parameter is shown. It can be a screen situated next to the touch-sensitive area or a screen of the device being controlled, such as a TV set.

## Claims

1. A user interface for selecting and controlling a plurality of parameters of a device and comprising a touch-sensitive apparatus (100) with a touch-sensitive area (101) and a controller (107) **characterized in that**
- the touch-sensitive area (101) has a closed-loop shape limited at outside by an outer closed curve (105) and at inside by an inner closed curve (106) and capable to receive a touch input,
- and that the controller (107) is connected to the touch-sensitive apparatus (100) and configured to
- determine an activation time,
- detect a starting point (102) of the touch input,
- detect a touch hold duration at the starting point (102),
- in case of a touch hold duration not shorter than the activation time, determine a parameter associated with the starting point (102),
- in case of a hold duration shorter than the activation time, determine a previously controlled parameter and
- control the determined parameter while the touch input moves along a control path (103), the control being sensitive to movement direction.

2. The user interface according to claim 1, **characterized in that** the starting points (102) and control paths (103) associated with parameters are arranged such that the control paths (103) of parameters associated with neighboring starting points (102) overlap.

3. The user interface according to claim 1, **characterized in that** the range of the control paths (103) of parameters are unlimited.

4. The user interface according to claim 1, **characterized in that** the touch-sensitive area (101) is of an annular shape.

5. The user interface according to claim 1, **characterized in that** it further comprises additional input means (104), and the controller (107) is configured to activate and/or deactivate upon detecting an input to the additional input means (104).

6. The user interface according to claim 1, **characterized in that** the touch-sensitive apparatus (100) is a touch screen.

7. The user interface according to claim 6, where the controller (107) is further configured to visualize regions (111, 112, 113) on the touch screen with which starting points (102) are associated.

8. The user interface according to claim 7, where the controller (107) is further configured to visualize on the touch screen (101) the range of the control path (103) of the determined parameter.

9. The user interface according to claim 7, where the controller (107) is further configured to visualize on the touch screen the value of the determined parameter.

10. A device comprising at least one user interface according to one of claims 1-9.

11. A device of claim 10 **characterized in that** it is a portable multimedia player.

12. A device of claim 10 **characterized in that** it is a remote control unit.

13. A method for selecting and controlling a plurality of parameters of a device having a touch-sensitive apparatus with a touch-sensitive area and a controller, the method comprising the steps of:
- detecting the touch-sensitive area of a closed-loop shape for receiving a touch input;
- determining an activation time for selecting a parameter;
- detecting a starting point of the touch input;
- detecting a touch hold duration at the starting point;
- in case of a touch hold duration not shorter than the activation time, determining a parameter associated with the starting point;
- in case of a hold duration shorter than the activation time, determining a previously controlled parameter;
- controlling the determined parameter while the touch input moves along a control path from the starting point, the control being sensitive to movement direction.

14. A computer program comprising program code means for performing all the steps of the method of claim 13 when said program is run on a computer.

15. A computer program product stored on a computer usable medium comprising computer readable program means which, when executed, cause a computer to perform all of the steps of the method of claim 13.
